(19) Europäisches Patentamt
European Patent Office
Office européen des brevets

(11) Veröffentlichungsnummer: **0 042 094**
**A1**

(12) # EUROPÄISCHE PATENTANMELDUNG

(21) Anmeldenummer: **81104167.2**

(22) Anmeldetag: **01.06.81**

(51) Int. Cl.³: **C 08 L 69/00**, C 08 L 55/02

(30) Priorität: **10.06.80 DE 3021726**

(43) Veröffentlichungstag der Anmeldung: **23.12.81**
**Patentblatt 81/51**

(84) Benannte Vertragsstaaten: **DE FR GB IT NL**

(71) Anmelder: **BAYER AG, Zentralbereich Patente, Marken und Lizenzen, D-5090 Leverkusen 1, Bayerwerk (DE)**

(72) Erfinder: **Idel, Karsten, Dr., Scheiblerstrasse 81, D-4150 Krefeld 1 (DE)**
Erfinder: **Buysch, Hans-Josef, Dr., Brandenburger Strasse 28, D-4150 Krefeld 1 (DE)**
Erfinder: **Peters, Horst, Dr., Winterberg 25, D-5090 Leverkusen 3 (DE)**
Erfinder: **Buekers, Josef, Kneinstrasse 58 a, D-4150 Krefeld 1 (DE)**

(54) **Stabilisierte thermoplastische Formmassen.**

(57) Die Erfindung betrifft die thermische Stabilisierung von Gemischen aus aromatischen Polycarbonaten und ABS-Kunststoffen mit 0,01 bis 3 Gew.-%, bezogen auf Gesamtmischung, von Estern der Borsäure, insbesondere solchen mit ortho- und/oder para-alkyl-substituierten Phenolen oder entsprechenden Bisphenolen.

EP 0 042 094 A1

BAYER AKTIENGESELLSCHAFT
Zentralbereich
Patente, Marken und Lizenzen

5090 Leverkusen, Bayerwerk
G/Rz

## Stabilisierte thermoplastische Formmassen

Mischungen aus ABS-Kunststoffen und aromatischen Polycarbonaten sind bekannt (DE-PS 1 170 141), ebenso entsprechende Mischungen mit Styrol/Acrylnitril-Copolymerisaten als drittem Bestandteil (DE-AS 1 810 993). Mischungen aromatischer Polycarbonate mit speziellen ABS-Kunststoffen werden in DE-PS 2 259 656, DE-OS 2 329 548 und DE-OS 2 329 546 beschrieben.

Bei der Verarbeitung solcher Mischungen können insbesondere bei der Herstellung großflächiger Teile bei Temperaturbelastungen bis zu 300°C Oberflächenstörungen in Form von Bläschen oder Streifen auftreten.

Gegenstand der Erfindung sind Mischungen aus aromatischen Polycarbonaten und ABS-Kunststoffen, die 0,01 bis 3 Gew.-%, bevorzugt 0,05 bis 2 Gew.-%, bezogen auf Gesamtmischung, eines oder mehrerer Ester der Borsäure, insbesondere solche mit ortho- und/oder para-alkylsubstituierten Phenolen oder entsprechenden Bisphenolen enthalten.

Insbesondere sind Gegenstand der Erfindung Mischungen aus

1. 10 - 90 Gew.-Tln eines aromatischen Polycarbonats,
2. 90 - 10 Gew.-Tln einer Mischung aus

2.1 25 - 100 Gew.-Tln eines Pfropfmischpolymerisats aus einem auf einen Kautschuk polymerisierten Monomerengemisch aus Styrol, Methylmethacrylat oder Mischungen daraus, einerseits, und Acrylnitril, Methacrylnitril oder Gemischen daraus, andererseits,

2.2 0 - 20 Gew.-Tln eines Butadienpolymerisats mit Butadiengehalten von mindestens 5 Gew.-%,

2.3 0 - 75 Gew.-Tln eines Copolymerisats aus Styrol, α-Methylstyrol oder Gemischen daraus, einerseits, und Methylmethacrylat, Acrylnitril, Methacrylnitril oder Gemischen daraus, andererseits,

welche d a d u r c h g e k e n n z e i c h n e t sind, daß sie als Stabilisatoren einen oder mehrere Ester der Borsäure mit ortho- und/oder para-alkylsubstituierten Phenolen bzw. Bisphenolen in Mengen von 0,01 - 3,0 Gew.-%, bevorzugt 0,05 - 2,0 Gew.-%, bezogen auf die Gesamtmischung, enthalten.

Ein weiterer Gegenstand der Erfindung ist die Verwendung von Estern der Borsäure, insbesondere solchen mit ortho- und/oder para-alkylsubstituierten Phenolen oder entsprechenden Bisphenolen in Mengen von 0,01 - 3,0 Gew.-%, bevorzugt 0,05 - 2,0 Gew.-%, bezogen auf Gesamtmischung, zur thermischen Stabilisierung von Mischungen aus aromatischen Polycarbonaten und ABS-Kunststoffen.

Die erfindungsgemäße Thermostabilisierung verbessert nicht nur das thermische Verhalten, sondern bewirkt bessere

Oberfläche, höhere Stabilität der Schmelze und bessere mechanische Eigenschaften der stabilisierten Produkte.

Erfindungsgemäß geeignet sind Borsäureester der Formel (I)

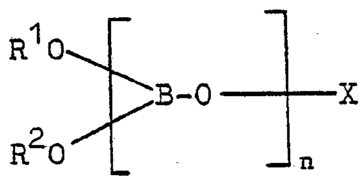

(I)

in der

X Wasserstoff, einen gegebenenfalls substituierten aliphatischen, cycloaliphatischen oder aromatischen Rest mit 1 - 18 C-Atomen oder einen Alkaryl- oder Aralkylrest mit 7 - 24 C-Atomen, wobei jeder der Reste auch olefinische Doppelbindungen und Heteroatome (bevorzugt O, S, P und nichtbasische Stickstoffe) enthalten kann,

n eine ganze Zahl von 1 - 4, vorzugsweise 1 - 2, entsprechend der Bindigkeit von X,

$R^1$ und $R^2$ unabhängig voneinander $C_1$-$C_{18}$-Alkyl, $C_5$-$C_{15}$-Cycloalkyl, $C_7$-$C_{24}$-Aralkyl bzw. -Alkaryl oder $C_6$-$C_{24}$-Aryl bedeuten, oder für einen geradkettigen oder verzweigten $C_1$-$C_9$-Alkyl- oder $C_5$-$C_7$-Cycloalkylrest stehen können, der mit 3 - 6gliedrigen cyclischen Resten, die als Heteroatome O und S enthalten, substituiert sein kann.

X kann mit $R^1$ oder $R^2$ verbunden sein und die gleiche Bedeutung wie $R^1$ und $R^2$ haben.

Geeignet sind weiter Borsäureester der Formel (II)

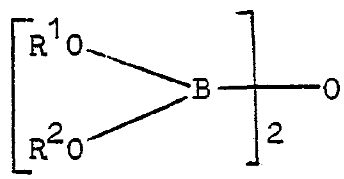

(II)

in der

$R^1$ und $R^2$ die oben genannte Bedeutung haben.

Erfindungsgemäß geeignet sind auch Borsäureester der Formel (III)

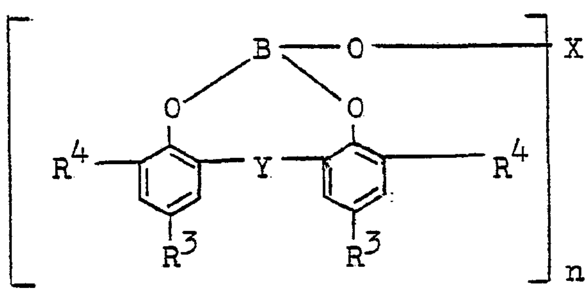

(III).

in der

X und n die oben angegebene Bedeutung haben,

$R^3$ und $R^4$ gleich oder verschieden sind und $C_1$-$C_9$ aliphatische, $C_5$-$C_6$ cycloaliphatische und $C_7$-$C_9$-Aralkyl oder $C_6$-$C_{10}$-Arylreste bedeuten,

Y für S oder $HCR^5$ steht, wobei $R^5$ = H, $C_1$-$C_6$-Alkyl, Cyclohexenyl oder Cyclohexyl ist.

Als Substituenten der zu X genannten Reste eignen sich vorzugsweise OH, $C_1$-$C_4$-Alkoxi-, -SH, $C_1$-$C_4$-Alkylmercapto-, $C_1$-$C_{12}$-Alkyl-, $C_5$-$C_6$-Cycloalkyl-, $C_7$-$C_{12}$-Aralkyl-, $C_6$-$C_{10}$-Aroxi- und $C_6$-$C_{10}$-Arylgruppen.

X steht vorzugsweise für Wasserstoff, einen Rest der allgemeinen Formel (IV)

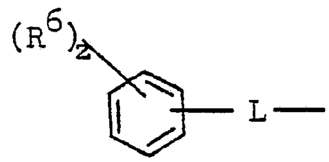

(IV)

mit

$R^6$ Wasserstoff, -L-, Aryl-, ein kondensierter Ring, ein $C_1$-$C_9$-Alkyl-, $C_7$-$C_{12}$-Alkylaryl, $C_1$-$C_4$-Alkylmercapto-, $C_1$-$C_4$-Alkoxi-, ß-Hydroxialkoxirest, eine OH-, Amino-SH-Gruppe, oder ein

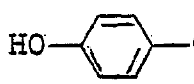-Q-Rest mit Q eine einfache Bindung, O,S,

O-$(CH_2)_2$-O, $C_1$-$C_4$-Alkyliden, und

z 1 oder 2,

L eine einfache Bindung oder Alkylenoxi

oder einen Rest der allgemeinen Formel (V)

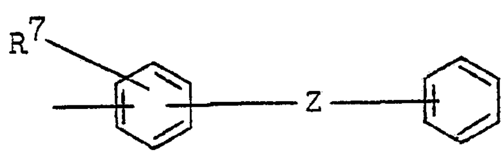

(V) .

mit

$R^7$ OH, H

Z eine einfache Bindung, ein $C_1$-$C_4$-Alkylidenrest, O, S oder O-$(CH_2)_2$-O,

oder einen ein- oder zweiwertigen $C_1$-$C_{18}$-Alkylrest, der durch Phenyl, OH oder Phenoxi substituiert ist und gegebenenfalls über Etherbrücken oder S-Brücken verbunden sein kann, einen $C_1$-$C_9$-Alkyl-cyclohexyl- oder Tetraallylrest oder einen Rest der allgemeinen Formel (VI)

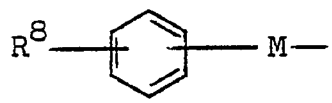 (VI)

mit

$R^8$ H, -M-, einen Hydroxialkyl-, einen Hydroxialkoxi-, Alkylenrest, H, OH oder eine Bindung,

M einen Alkylen-, Alkylencycloalkylrest bedeuten.

Außerdem kann X für

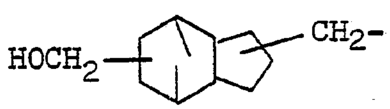 oder 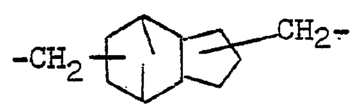

oder Oxialkylierungsprodukte von Glycerin, Trimethylolpropan oder Pentaerythrit mit 3-8-Oxiethyl- oder Oxipropylresten stehen.

Erfindungsgemäß geeignet sind auch Borsäureester der Formel (VII)

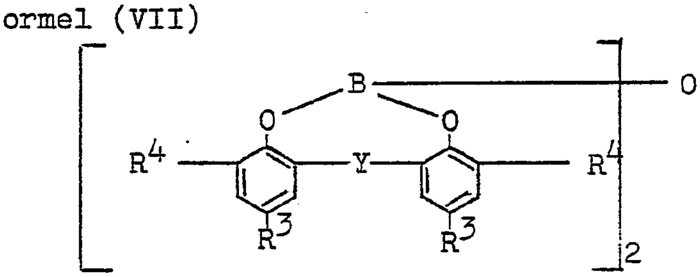 (VII)

in der

Y, $R^3$ und $R^4$ die oben angegebene Bedeutung haben.

Bevorzugt sind Stabilisatoren der Formel (I) und (II) mit X = H und $R^1$ und $R^2$ = Aromat, vorzugsweise substituiert mit $C_1$-$C_9$-Alkylresten in o- und/oder p-Stellung zur Esterbindung.

Besonders bevorzugt sind Verbindungen der Formeln (III) und (VII), in denen

X H, $R^3$ einen $C_1$-$C_9$-Alkylrest, einen $C_5$-$C_6$-Cycloalkylrest, einen $C_7$-$C_9$-Aralkylrest, oder einen $C_6$-$C_{10}$-Arylrest bedeutet,

$R^4$ einen Benzyl-, α-Methylbenzyl-, α,α-Dimethylbenzyl-, Methyl-, Ethyl-, Isopropyl-, tert.-Butyl-, tert.-Amyl-, Isononyl-, Cyclopentyl- oder Cyclohexylrest darstellt, und

Y für S, $CH_2$, $CH_3$-CH, $CH_3CH_2CH$, $CH_3CH_2CH_2$-CH, $(CH_3)_2$CH-CH,

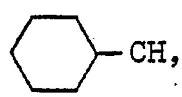 , 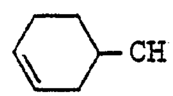

steht.

Für die erfindungsgemäßen Formmassen können grundsätzlich alle thermoplastischen Polycarbonate verwendet werden.

Unter aromatischen Polycarbonaten im Sinne der Erfindung werden Homopolycarbonate und Copolycarbonate verstanden, denen z.B. ein oder mehrere der folgenden Diphenole zugrundeliegen:

Hydrochinon
Resorcin
Dihydroxidiphenyle

Bis-(hydroxiphenyl)-alkane
Bis-(hydroxiphenyl)-cycloalkane
Bis-(hydroxiphenyl)-sulfide
Bis-(hydroxiphenyl)-ether
Bis-(hydroxiphenyl)-ketone
Bis-(hydroxiphenyl)-sulfoxide
Bis-(hydroxiphenyl)-sulfone
α,α'-Bis-(hydroxiphenyl)-diisopropylbenzole,

sowie deren kernalkylierte und kernhalogenierte Verbindungen. Diese und weitere geeignete Diphenole sind z.B. in den US-Patentschriften 3 028 365; 2 999 835; 3 148 172; 3 275 601; 2 991 273; 3 271 367; 3 062 781 und 2 999 846, in den deutschen Offenlegungsschriften 1 570 703; 2 063 050; 2 063 052; 2 211 956; 2 211 957, der französischen Patentschrift 1 561 518 und der Monographie "H. Schnell, Chemistry and Physics of Polycarbonates, Interscience Publishers, New York, 1964" beschrieben.

Bevorzugte Diphenole sind z.B.:

4,4'-Dihydroxidiphenyl
2,2-Bis-(4-hydroxiphenyl)-propan
2,4-Bis-(4-hydroxiphenyl)-2-methylbutan
1,1-Bis-(4-hydroxiphenyl)-cyclohexan
α,α'-Bis-(4-hydroxiphenyl)-p-diisopropylbenzol
2,2-Bis-(3-methyl-4-hydroxiphenyl)-propan
2,2-Bis-(3-chlor-4-hydroxiphenyl)-propan
Bis-(3,5-dimethyl-4-hydroxiphenyl)-methan
2,2-Bis-(3,5-dimethyl-4-hydroxiphenyl)-propan
Bis-(3,5-dimethyl-4-hydroxiphenyl)-sulfon
2,4-Bis-(3,5-dimethyl-4-hydroxiphenyl)-2-methylbutan
1,1-Bis-(3,5-dimethyl-4-hydroxiphenyl)-cyclohexan
α,α'-Bis-(3,5-dimethyl-4-hydroxiphenyl)-p-diisopropylbenzol

2,2-Bis-(3,5-dichlor-4-hydroxiphenyl)-propan
2,2-Bis-(3,5-dibrom-4-hydroxiphenyl)-propan.

Besonders bevorzugte Diphenole sind z.B.:

2,2-Bis-(4-hydroxiphenyl)-propan
2,2-Bis-(3,5-dimethyl-4-hydroxiphenyl)-propan
2,2-Bis-(3,5-dichlor-4-hydroxiphenyl)-propan
2,2-Bis-(3,5-dibrom-4-hydroxiphenyl)-propan
1,1-Bis-(4-hydroxiphenyl)-cyclohexan.

Bevorzugte aromatische Polycarbonate sind solche, denen eines oder mehrere der als bevorzugt genannten Diphenole zugrundeliegen. Besonders bevorzugt werden Copolycarbonate, denen 2,2-Bis-(4-hydroxiphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxiphenyl)-propan oder 2,2-Bis-(3,5-dimethyl-4-hydroxiphenyl)-propan.

Die aromatischen Polycarbonate können nach bekannten Verfahren hergestellt werden, z.B. einer Schmelzumesterung aus Bisphenol und Diphenylcarbonat und in Lösung aus Bisphenolen und Phosgen. Die Lösung kann homogen sein ("Pyridinverfahren") oder heterogen ("Zweiphasen-Grenzflächenverfahren"). Erfindungsgemäß sind Polycarbonate, die in Lösung, insbesondere nach dem Zweiphasen-Grenzflächenverfahren hergestellt worden sind, besonders geeignet.

Die aromatischen Polycarbonate können durch den Einbau geringer Mengen, vorzugsweise von Mengen zwischen 0,05 und 2,0 Mol-%, bezogen auf eingesetzte Diphenole, an drei- oder mehr als dreifunktionellen Verbindungen, z.B. solchen mit drei oder mehr als drei phenolischen Hydroxigruppen,

verzweigt sein.

Polycarbonate dieser Art sind z.B. in den DE-OS 1 570 533; 1 595 762; 2 116 974; 2 113 347; 2 500 092, der GB-PS 1 079 821, der US-PS 3 544 514 beschrieben.

Einige der verwendbaren Verbindungen mit drei oder mehr als drei phenolischen Hydroxigruppen sind beispielsweise Phloroglucin, 4,6-Dimethyl-2,4,6-tri-(4-hydroxiphenyl)-hepten-2, 4,6-Dimethyl-2,4,6-tri-(4-hydroxiphenyl)-heptan, 1,3,5-Tri-(4-hydroxiphenyl)-benzol, 1,1,1-Tri-(4-hydroxiphenyl)-ethan, Tri-(4-hydroxiphenyl)-phenylmethan, 2,2-Bis-4,4-bis-(4-hydroxiphenyl)-cyclohexyl-propan, 2,4-Bis-(4-hydroxiphenyl-isopropyl)-phenol, 2,6-Bis-(2'-hydroxi-5'-methyl-benzyl)-4-methylphenol, 2-(4-Hydroxiphenyl)-2-(2,4-dihydroxiphenyl)-propan und 1,4-Bis-(4,4"-dihydroxitriphenyl-methyl)-benzol. Einige der sonstigen dreifunktionellen Verbindungen sind 2,4-Dihydroxibenzoesäure, Trimesinsäure, Cyanurchlorid und 3,3-Bis-(4-hydroxiphenyl)-2-oxo-2,3-dihydroindol.

Die aromatischen Polycarbonate sollen in der Regel mittlere Gewichtsmittel-Molekulargewichte $\overline{M}_w$ von 10 000 bis über 200 000, vorzugsweise von 20 000 bis 80 000 haben (ermittelt durch Messungen der rel. Viskosität in $CH_2Cl_2$ bei 25°C bei einer Konzentration von 0,5 Gew.-%).

Im Falle von Polycarbonatmischungen können den hochmolekularen Polycarbonaten mit $\overline{M}_w$ von 10 000 bis 200 000 auch kleine Anteile niedermolekularer Polycarbonate, z.B. mit einem mittleren Polymerisationsgrad von 2 - 20, zugemischt sein.

Ein weiterer Bestandteil der Formmassen ist ein Pfropfpolymerisat (2.1), in welchem auf einen Kautschuk eine Monomerenmischung von 95 - 50 Gew.-% Styrol, Methylmethacrylat oder Mischungen daraus und 5 - 50 Gew.-% Acrylnitril, Methylmethacrylat oder Mischungen daraus pfropfpolymerisiert ist. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylesters von Acryl- oder Methacrylsäure (z.B. Methylacrylat, Ethylacrylat, Methylmethacrylat und Ethylmethacrylat); prinzipiell sind alle elastifizierenden Komponenten geeignet, sofern sie ein kautschukelastisches Verhalten zeigen.

Neben dem Pfropfpolymerisat kann die Formmasse noch ein Butadienpolymerisat (2.2) enthalten.

Die Butadienpolymerisate, die in den Formmassen enthalten sind, sind bevorzugt Copolymerisate von 5 - 95 Gew.-% Butadien und 70 - 5 Gew.-% Acrylnitril, Acrylsäure, Methacrylsäure, $C_1$-$C_6$-Alkylester der Acryl- oder Methacrylsäure (besonders bevorzugt Methylmethacrylat), Divinylbenzol und Mischungen dieser Comonomeren. Insbesondere sind geeignet Copolymerisate aus 70 - 90 Gew.-% Butadien und 30 - 10 Gew.-% Styrol, Copolymerisate aus 60 - 95 Gew.-% Butadien und 40 - 5 Gew.-% Methylmethacrylat, Copolymerisate von 30 - 95 Gew.-% Butadien und 70 - 5 Gew.-% Acrylsäurebutylester, sowie Copolymerisate aus 60 - 80 Gew.-% Butadien und 40 - 20 Gew.-% Acrylnitril. In diesen letzteren Copolymerisaten können auch noch zusätzlich kleinere Mengen (bis etwa insgesamt 10 %) Methacrylsäure und/oder Divinylbenzol einpolymerisiert sein. Beispiele für Ter- bzw. Quarterpolymerisate der letztgenannten Art sind Copolymerisate aus 63 % Butadien, 34 % Acrylnitril und 3 % Methacrylsäure oder Copolymerisate aus 60 Gew.-% Butadien, 36 Gew.-% Acrylnitril, 3 % Methacrylsäure und

1 % Divinylbenzol.

Neben dem Pfropfcopolymerisat kann die Formmasse noch ein Copolymerisat (2.3) aus den Pfropfmonomeren oder ähnlichen Monomeren enthalten. Es handelt sich um Copolymerisate aus 95 - 50 Gew.-% Styrol, α-Methylstyrol, Methylmethacrylat oder Mischungen daraus mit 5 - 50 Gew.-% Acrylnitril, Methacrylnitril, Methylmethacrylat oder Mischungen daraus. Solche Copolymeren entstehen häufig bei der Pfropfpolymerisation als Nebenprodukte, besonders dann, wenn große Mengen Monomerer auf kleine Mengen Kautschuk gepfropft werden. Es ist dabei möglich, neben oder anstelle der so entstandenen Copolymeren noch getrennt hergestellte Copolymere dieser Art zuzumischen.

Die erfindungsgemäßen Formmassen können durch Vermischen der Einzelkomponenten erhalten werden. In einer bevorzugten Herstellungsmethode werden zunächst die Latices des Pfropfpolymerisats (2.1) und gegebenenfalls die des Butadienpolymerisats (2.2) und des Copolymerisats (2.3) gemischt und die Feststoffe gemeinsam ausgefällt und getrocknet. Die so erhaltene Pulvermischung wird dann mit dem Polycarbonat abgemischt. Die Einzelkomponenten der erfindungsgemäßen Formmassen können aber auch getrennt hergestellt und dann auf bekannten Mischvorrichtungen gemischt werden. Geeignet sind hierfür z.B. Mischwalzwerke, Schneckenextruder oder Innenmischer.

Die Einarbeitung der erfindungsgemäßen Stabilisatoren kann nach bekannten Techniken in jeglicher Weise erfolgen. So können die Stabilisatoren z.B. über Kneter oder Schneckenmaschinen sowohl vorher in die Einzelkomponenten der Mischung als auch direkt bei der thermoplastischen Verarbeitung der Einzelkomponenten zur Gesamtmischung oder auch

nachträglich in die Gesamtmischung selbst eingearbeitet werden.

Entweder enthalten die Einzelkomponenten der erfindungsgemäßen Formmassen Zusätze wie Stabilisatoren, Flammschutzmittel, Pigmente, Fließmittel, Gleitmittel, Entformungsmittel, Antistatika, oder bei der Vermischung der Einzelkomponenten können die oben genannten Zusätze zugefügt werden.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften haben. Eine weitere Form der Verarbeitung ist die Herstellung von Formkörpern durch Tiefziehen aus vorher hergestellten Platten oder Folien.

## BEISPIELE

### Beispiel 1

Borsäureester aus Phenol und Bis-(2-hydroxi-3-cyclohexyl-5-methylphenyl)-methan

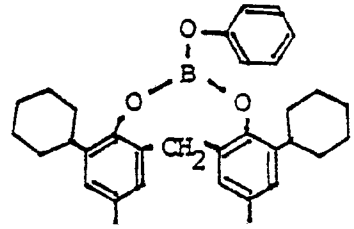

Ein Gemisch von 145 g (0,5 Mol) Triphenylborat und 196 g (0,5 Mol) Bis-(2-hydroxi-2-cyclohexyl-5-methyl-phenyl)-methan wird bei 8 - 10 mb von 100 - 218°C erhitzt und dabei 92 g Phenol abdestilliert. Man erhält 248 g der Titelverbindung als gelbliches, sprödes Harz.

### Beispiel 2

Borsäureester aus Bis-(2-hydroxi-3-cyclohexyl-5-methylphenyl)-methan

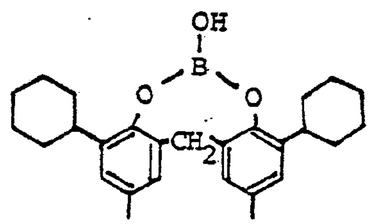

126 g (0,25 Mol) des Produktes aus Beispiel 1 wird in wasserfreiem Dioxan gelöst und mit 4,5 g (0,25 Mol) $H_2O$ 3 Std. unter Rückfluß gekocht. Nach Abdestillieren von Dioxan und anschließend 22 g Phenol bei 10 - 12 mb erhält man 105 g eines gelben, spröden Harzes.

### Beispiel 3

Borsäureester aus Stearylalkohol und Bis-(2-hydroxi-3-cyclohexyl-5-methylphenyl)-methan

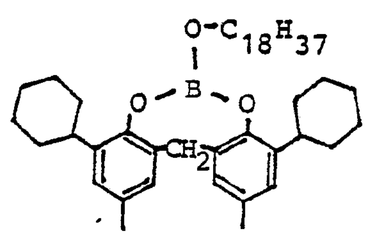

126 g (0,25 Mol) des Produktes aus Beispiel 1 werden mit 68 g (0,25 Mol) Stearylalkohol bei 10 - 12 mb auf 150 bis 200°C erhitzt und dabei 22 g Phenol abdestilliert. Man erhält 171 g eines gelben Harzes.

Beispiel 4

Borsäureester aus Bis(2-hydroxi-3-tert.-butyl-5-methylphenyl)-methan

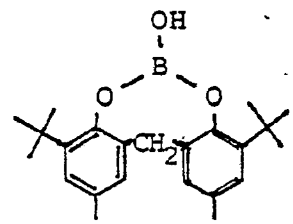

Ein Gemisch von 145 g (0,5 Mol) Borsäuretriphenylester und 9 g (0,5 Mol) $H_2O$ wird unter Stickstoff ca. 2 Std. bei 80 - 100°C gerührt. Dann gibt man 170 g (0,5 Mol) Bis-(2-hydroxi-3-tert.-butyl-5-methyl-phenyl)-methan hinzu und erhitzt bei 20 mb von 85 - 180°C und destilliert dabei 140 g Phenol ab.
Man erhält als Rückstand ein gelbes, sprödes Harz 183 g Tp. 150 - 2°C (aus Ligroin).

Beispiel 5

Borsäureester aus Phenol und Bis-(2-hydroxi-3,5-dimethyl-phenyl)-isobutan-1,1

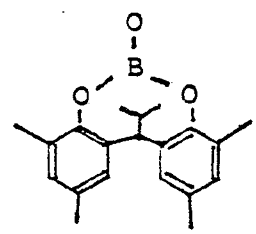

Ein Gemisch aus 149 g (0,5 Mol) 1,1-Bis-(2-hydroxi-3,5-dimethylphenyl-)isobutan und 145 g (0,5 Mol) Triphenylborat wird bei 25 mb von 106 - 215°C erhitzt und dabei 92 g Phenol abdestilliert. Man erhält 200 g eines gelblichen, spröden Harzes, Fp. 140 - 143°C (aus Benzol).

| Analyse: | gef. | ber. |
|---|---|---|
| | B 2,5 - 2,6 % | 2,75 % |
| | C 77,9 - 78,4 % | 78,0 % |

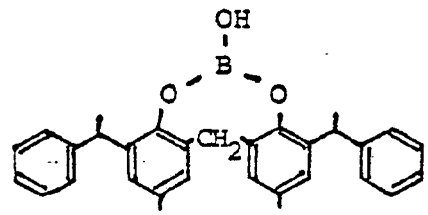

Beispiel 6

Borsäureester aus Bis-(2-hydroxi-3-styryl-5-methylphenyl)-methan

Ein Gemisch von 87 g (0,3 Mol) Triphenylborat und 5,4 g (0,3 Mol) $H_2O$ wird 2 Std. unter Stickstoff bei 80 - 100°C gerührt, 131 g (0,3 Mol) Bis-(2-hydroxi-3-styryl-5-methylphenyl)-methan zugegeben und bei 25 mb von 102 - 215°C erhitzt. Dabei gehen 83 g Phenol über. Man erhält die Titelverbindung als hellbraunes, sprödes Harz, das sich nicht kristallisieren läßt (158 g).

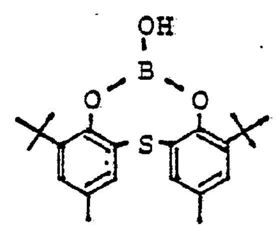

Beispiel 7

Borsäureester aus Bis-(2-hydroxi-3-tert.-butyl-5-methylphenyl)-sulfid

Ein Gemisch von 87 g (0,3 Mol) Triphenylborat und 5,4 g (0,3 Mol) $H_2O$ wird 2 Std. auf 80 - 100°C unter Rühren und Stickstoff erhitzt, 107 g (0,3 Mol) Bis-(2-hydroxi-3-tert.-butyl-5-methyl-phenyl)-sulfid zugegeben und bei 20 - 25 mb von 80 - 220°C erhitzt. Dabei gehen 80 g Phenol über. Es bleiben 118 g der Titelverbindung, ein hellbraunes, sprödes Harz.

Beispiel 8

Borsäureester aus Phenol und Bis-(2-hydroxi-3-styryl-5-methyl-phenyl)-methan

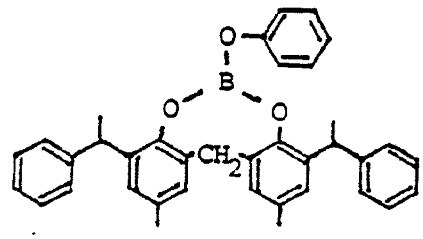

Ein Gemisch von 131 g (0,3 Mol) Bis-2-hydroxi-3-styryl-5-methyl-phenyl)-methan und 87 g (0,3 Mol) Triphenylborat wird bei 25 - 30 mb von 102 auf 235°C erhitzt. Es gehen 54 g Phenol über. Es bleiben im Sumpf 162 g der oben genannten Verbindung als gelbbraunes, nicht kristallisierendes Harz.

| Analyse: | gef. | ber. |
|---|---|---|
| | B 2,0 - 2,1 % | 2,01 % |
| | C 79,7 - 81,3 % | 81,5 % |

Beispiel 9

Borsäureester aus Bis-(2-hydroxi-3-cyclohexyl-5-methyl-phenyl)-sulfid

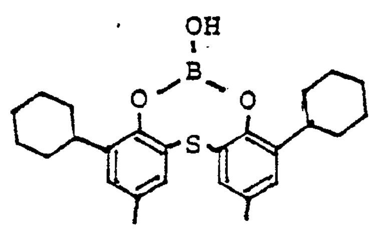

Ein Gemisch von 5,4 g (0,3 Mol) $H_2O$ und 87 g (0,3 Mol) Triphenylborat wird 2 - 3 Std. unter Rühren und Stickstoff auf 80 - 100°C erhitzt, 123 g (0,3 Mol) Bis-(2-hydroxi-3-cyclohexyl-5-methyl-phenyl)-sulfid zugegeben und bei 20 - 22 mb auf 80 - 230°C erhitzt. 80 g Phenol gehen über. Als hellbraunes Harz bleiben 133 g der Titelverbindung.

| Analyse: | gef. | ber. |
|---|---|---|
| | B 2,5 - 2,6 % | 2,52 % |
| | C 71,7 - 71,8 % | 71,5 % |

Beispiel 10

Borsäureester aus Phenol und Bis-(2-hydroxi-3-styryl-5-methyl-phenyl)-sulfid

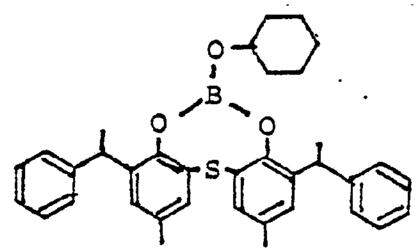

136 g (0,3 Mol) Bis-(2-hydroxi-3-styryl-5-methyl-phenyl)-sulfid und 87 g (0,3 Mol) Triphenylborat werden bei 20 mb von 120 auf 230°C erhitzt und dabei 81 g Phenol abdestilliert. Die Titelverbindung hinterbleibt als sprödes Harz (141 g) im Rückstand.

Beispiel 11

Herstellung von Tris-2,2-dimethylenoxid-butyl-borat

235,2 g (1,02 Mol) Borsäuretributylester werden mit 712,5 g 3-Ethyl-3-hydroxiethyloxetan vermischt. Dann werden 1,5 g Natriummethylat zugesetzt. Die Lösung wird unter Rühren und Einleiten von Stickstoff innerhalb von 3 Std. auf 160°C hochgeheizt. Dabei destillieren über eine Kolonne 200 g Destillat bei einer Kopftemperatur von 117 bis 118°C ab. Dann wird die Reaktionsmischung abgekühlt, die Kolonne abgenommen und ein Vakuum von 20 Torr angelegt. Unter diesen Bedingungen destillieren bei nochmaligem Aufheizen bis auf eine Sumpftemperatur von 120°C 24 g Destillat ab. Der Rückstand wird im Hochvakuum fraktioniert. Nach einem Vorlauf von 365 g, der von 75 - 165°C/0,2 Torr übergeht, destilliert das Reaktionsprodukt im Bereich von 165 - 170°C/0,2 Torr über.
Es werden 256 g = 70,4 % der Theorie erhalten.

$n_{20}^{D}$ : 1,4627

| Analyse: | Gef. | Ber. |
|---|---|---|
| | C 61,4-6 | 60,76 |
| | H 9,26 | 9,27 |
| | B 3,1 | 3,09 |

Die Formmassen der nachfolgenden Beispiele wurden auf einem Innenkneter bei 230°C bzw. einem Doppelwellenextruder bei 260°C durch Mischen des ABS-Polymerisats mit der Polycarbonatkomponente und dem jeweiligen Stabilisator hergestellt.

Die Eigenschaften der Formmassen wurden nach folgenden Methoden bestimmt:

1. Kerbschlagzähigkeit nach DIN 53 453 bei Raumtemperatur. Die Prüfkörper wurden bei den angegebenen Massetemperaturen auf Schneckenspritzgießmaschinen hergestellt.

2. Die optische Beurteilung erfolgt an spritzgegossenen Musterplatten (60 x 40 x 2 mm). Zugrundegelegt wurde eine Bewertungsskala von 1 - 7. Hierin bedeutet
   - 1 einwandfreie Oberfläche,
   - 3 - 4 geringfügige, vertretbare Oberflächenstörungen,
   - 7 starke Schlieren.

3. Der Intrinsic-Melt-Index (IMI) und die theoretische Halbwertszeit $t_h$ wurden bei 5-kg-Belastung nach DIN 53 735 bei 260°C gemessen.

Bei diesen Beispielen wurden ein Polycarbonat auf Basis Bisphenol A mit einer relativen Lösungsviskosität rel = 1,290 bis 1,300 (0,5 g Polycarbonat in 100 ml Methylenchlorid bei 25°C) und folgende ABS-Polymerisate verwendet:

<u>ABS-Polymerisat A</u>

a. 60 Gew.-Tle eines Pfropfpolymerisats, hergestellt durch Pfropfung von 35 Gew.-Tln Styrol und 15 Gew.-Tln Acrylnitril auf 50 Gew.-Tle eines grobteiligen Polybutadiens (gemäß den Angaben der DE-AS 1 247 665 und 1 269 360 über eine Emulsionspolymerisation), wobei der mittlere Teilchendurchmesser der in Latexform vorliegenden Polybutadienpfropfgrundlage zwischen 0,3 und 0,4 $\mu$ liegt, und

b. 40 Gew.-Tle eines Styrol-Acrylnitril-Copolymerisats mit einem Styrol-Acrylnitril-Verhältnis von 70 : 30 und einer Grenzviskosität von $[\eta]$ = 79,1 (Messung in Dimethylformamid bei 20°C).

<u>ABS-Polymerisat B</u>

a.) 70 Gew.-Tle eines Pfropfpolymerisats, hergestellt durch Pfropfung von 35 Gew.-Tln Styrol und 15 Gew.-Tln Acrylnitril auf 50 Gew.-Tle eines feinteiligen Polybutadiens mit einem mittleren Teilchendurchmesser von 0,05 - 0,15 $\mu$, und

b.) 30 Gew.-Tle eines Copolymerisats aus Styrol-Acrylnitril im Verhältnis 70 : 30 mit einer Grenzviskosität von $[\eta]$ = 80,9.

| Beispiele 12 - 15 | | (12) | (13) | (14) | (15) |
|---|---|---|---|---|---|
| | | Anteil i.d.Gesamtmischung in Gew.-Tln | | | |
| Polycarbonat | | 45 | 45 | 45 | 45 |
| ABS-Polymerisat A | | 55 | 55 | 55 | 55 |
| Stabilisator aus Beispiel 2 | | - | 0,25 | - | 0,1 |
| Stabilisator aus Beispiel 7 | | - | - | 0,25 | 0,1 |
| Kerbschlagzähigkeit kJ/m² | | 13,7 | 30,2 | 29,1 | 33,0 |
| optische Beurteilung | 250°C | 1 | 1 | 1 | 1 |
| nach Spritzgießen | 260°C | 1 | 1 | 1 | 1 |
| bei Temperatur | 270°C | 3 | 1 | 1-2 | 1 |
| bei Temperatur | 280°C | 4 | 2 | 2 | 2 |

| Beispiele 16 - 23 | | Anteile i.d.Gesamtmischung (in Gew.-Tln) | | | | | | | |
|---|---|---|---|---|---|---|---|---|---|
| | | (16) | (17) | (18) | (19) | (20) | (21) | (22) | (23) |
| Polycarbonat | | 60 | 60 | 60 | 60 | 60 | 60 | 60 | 60 |
| ABS-Polymerisat A | | 40 | 40 | 40 | - | 40 | 40 | 40 | - |
| ABS-Polymerisat B | | - | - | - | 40 | - | - | - | 40 |
| Stabilisator Beispiel 2 | | - | 0,1 | 0,25 | 0,25 | - | - | 0,1 | - |
| Stabilisator Beispiel 9 | | - | - | - | - | 0,25 | - | - | - |
| Stabilisator Beispiel 11 | | - | - | - | - | - | 0,25 | - | - |
| Stabilisator Beispiel 8 | | - | - | - | - | - | - | - | 0,25 |
| Optische Beurteilung | 270°C | 2 | 1 | 1 | 1 | 1 | 1 | 1 | 1 |
| nach Spritzgießen | 280°C | 4 | 1 | 1 | 1 | 1 | 1 | 1 | 1 |
| bei Temperatur | 290°C | 5 | 2 | 1 | 2 | 1 | 3 | 2 | 3 |
| bei Temperatur | 300°C | - | 4 | 4 | 4 | 3 | 4 | 5 | 5 |

Beispiele 23 - 26

| | | (23) | (24) | (25) | (26) |
|---|---|---|---|---|---|
| | | Anteil i.d. Gesamtmischung (in Gew.-Tln) | | | |
| Polycarbonat | | 70 | 70 | 70 | 70 |
| ABS-Polymerisat A | | 30 | 30 | 30 | 30 |
| Stabilisator aus Beispiel 2 | | - | 0,1 | 0,25 | - |
| Stabilisator aus Beispiel 11 | | - | - | - | 0,25 |
| optische Beurteilung | 270°C | 1 | 1 | 1 | 1 |
| nach Spritzgießen | 280°C | 1 | 1 | 1 | 1 |
| bei Temperatur | 290°C | 4 | 2 | 1 | 1 |
| bei Temperatur | 300°C | 6 | 3 | 3 | 4 |
| Kerbschlagzähigkeit | 280°C | 61 | 48 | 53 | 46 |
| $kJ/m^2$ | 300°C | 12 | 22 | 24 | 20 |
| Schmelzeverhalten | | | | | |
| IMI g/10 min. | | 7,3 | 7,9 | 8,2 | 7,8 |

Patentansprüche:

1. Mischungen aus aromatischen Polycarbonaten und ABS-Kunststoffen, die 0,01 bis 3,0 Gew.-%, bezogen auf Gesamtmischung, eines Esters der Borsäure als Stabilisator enthalten.

2. Mischungen gemäß Anspruch 1, dadurch gekennzeichnet, daß der Ester der Borsäure ein Ester eines o- und/oder p-alkylsubstituierten Phenols oder eines Bisphenols ist.

3. Verwendung von Borsäureestern in Mengen von 0,01 bis 3,0 Gew.-%, bezogen auf Gesamtmischung, als Stabilisatoren für Gemische aus aromatischen Polycarbonaten und ABS-Kunststoffen.

4. Verwendung eines Esters der Borsäure mit einem o- und/oder p-alkylsubstituierten Phenol oder einem Bisphenol gemäß Anspruch 3.

5. Verfahren zum Stabilisieren eines Gemisches aus aromatischem Polycarbonat und ABS-Kunststoff, dadurch gekennzeichnet, daß man 0,01 bis 3,0 Gew.-%, bezogen auf Gesamtmischung, eines Borsäureesters einarbeitet.

6. Verfahren nach Anspruch 5, dadurch gekennzeichnet, daß man einen Ester der Borsäure mit o- und/oder p-alkylsubstituierten Phenolen oder einem Bisphenol einarbeitet.

Europäisches Patentamt

# EUROPÄISCHER RECHERCHENBERICHT

0042094 Nummer der Anmeldung

EP 81 10 4167

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| | DE - B - 1 239 471 (BAYER)<br>* Anspruch; Seite 1, Spalte 2, Zeilen 32-38 *<br>-- | 1-6 | C 08 L 69/00<br>55/02 |
| | DE - B - 1 170 141 (BORG-WARNER)<br>* Anspruch *<br>---- | 1 | |

RECHERCHIERTE SACHGEBIETE (Int. Cl.3)

C 08 L 69/00
55/02

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 28-09-1981 | DECOCKER |

EPA form 1503.1 06.78